# EUROPEAN PATENT APPLICATION

(11) **EP 4 576 328 A1**
(43) Date of publication of application: **25.06.2025**
(21) Application number: 23854039.7
(22) Date of filing: 06.06.2023
(51) Int. Cl.: H01M 10/613, H01M 10/625, H01M 10/6557, H01M 10/655, H01M 50/502

(54) **BATTERY PACK AND VEHICLE**

(30) Priority: 19.08.2022 CN 202211001340
(71) Applicant: BYD Company Limited, Shenzhen, Guangdong 518118 (CN)
(72) Inventor: ZHENG, Weixin, Shenzhen, Guangdong 518118 (CN); WU, Yanfeng, Shenzhen, Guangdong 518118 (CN); YOU, Yueqiu, Shenzhen, Guangdong 518118 (CN); SHU, Yuanmao, Shenzhen, Guangdong 518118 (CN); ZHAN, Ziheng, Shenzhen, Guangdong 518118 (CN)
(74) Representative: Mathys & Squire
(86) International application number: PCT/CN2023/098599
(87) International publication number: WO 2024/037133

(57) **Abstract**

A vehicle having a battery pack. The battery pack comprises a single-cell battery and a heat transfer element. The single-cell battery comprises a housing, a cell, and multiple terminal poles. An accommodation space is defined in the housing, and the cell is disposed in the accommodation space. The housing at least has a first surface and a second surface. The terminal poles are disposed at the cell and extend out of the housing from the first surface, and at least one of the terminal poles is sheet-shaped. The heat transfer element can transfer heat of the single-cell battery from the first surface to the second surface.

## Description

### CROSS-REFERENCE TO RELATED APPLICATIONS

The present disclosure claims priority to Chinese Patent Application No. 2022110013407, filed on August 19, 2022 and entitled "BATTERY PACK AND VEHICLE". The entire content of the above-referenced application is incorporated herein by reference.

### FIELD

The present disclosure relates to the field of batteries, and more specifically, to a battery pack and a vehicle.

### BACKGROUND

In the related art, a power battery system generates a large amount of heat during fast charging. A poor heat dissipation capability limits a fast-charging capability of the conventional power battery system.

### SUMMARY

An objective of the present disclosure is to provide a battery pack. The battery pack can resolve a technical problem of a limited fast-charging capability as a result of a poor heat dissipation effect of the battery pack in the related art.

According to a first aspect of the present disclosure, a battery pack is provided, which includes a cell and a heat transfer member. The cell includes a housing, a cell core, and multiple terminal poles. An accommodating space is defined in the housing. The cell core is arranged in the accommodating space. The housing has at least a first surface and a second surface. Each of the terminal poles is arranged on the cell core and extends out of the housing from the first surface. At least one of the terminal poles is a sheet-like element. The heat transfer member is configured to transfer heat of the cell from the first surface to the second surface.

According to an embodiment of the present disclosure, the housing has edges extending along a first direction, a second direction, and a third direction. The first direction and the second direction define a first plane. The first direction and the third direction define a second plane. The second direction and the third direction define a third plane. The first surface is connected to the second surface. The first surface is parallel to the third plane. The second surface is parallel to the second plane.

According to an embodiment of the present disclosure, a surface area of the second surface is greater than a surface area of the first surface.

According to an embodiment of the present disclosure, the heat transfer member includes a thermally conductive member. The thermally conductive member is arranged on the first surface and is thermally connected to the terminal pole. The thermally conductive member extends toward a position of the second surface, to transfer heat of the terminal pole to the second surface.

According to an embodiment of the present disclosure, multiple cells are arranged. The thermally conductive member is thermally connected to a terminal pole of each of two cells arranged adjacent to each other.

According to an embodiment of the present disclosure, the heat transfer member further includes a first connecting piece, a second connecting piece, and a third connecting piece that are successively connected. The first connecting piece, the second connecting piece, and the third connecting piece are mated with each other to form an accommodating groove. The accommodating groove is configured to accommodate the thermally conductive member. The first connecting piece is connected to the terminal pole of one of the two cells. The second connecting piece is connected to the terminal pole of the other of the two cells. The third connecting piece is located between the first connecting piece and the second connecting piece and is connected to the first connecting piece and the second connecting piece.

According to an embodiment of the present disclosure, the heat transfer member further includes a fourth connecting piece. The fourth connecting piece is arranged on an end portion of the third connecting piece close to the second surface. The fourth connecting piece is thermally connected to the thermally conductive member and the second surface.

According to an embodiment of the present disclosure, the battery pack further includes a heat sink. At least part of the heat sink is arranged opposite to the first surface and is configured to exchange heat with the terminal pole.

According to an embodiment of the present disclosure, the heat sink includes at least one tubular member. The tubular member has a first fluid channel for a cooling fluid to flow. Part of the tubular member is formed as at least part of the heat transfer member.

According to an embodiment of the present disclosure, the battery pack further includes a cooler. The cooler is thermally connected to the second surface.

According to an embodiment of the present disclosure, a second fluid channel is provided in the cooler for the cooling fluid to flow. The cooler is thermally connected to the heat transfer member.

According to an embodiment of the present disclosure, two coolers are arranged. The cell is located between the two coolers.

According to an embodiment of the present disclosure, the terminal pole is parallel to the third plane.

According to a second aspect of the present disclosure, a vehicle is provided, which includes the battery pack according to any of the above embodiments.

According to an embodiment of the present disclosure, in an aspect, an overcurrent area is increased by the sheet-like terminal pole. In another aspect, rapid heat dissipation at a position near the first surface, especially at a position of the terminal pole is achieved by the heat transfer member, which achieves fast charging of the battery pack.

Other features and advantages of the present disclosure become apparent through the following detailed description of exemplary embodiments of the present disclosure with reference to the accompanying drawings.

### BRIEF DESCRIPTION OF THE DRAWINGS

The above and/or additional aspects and advantages of the present disclosure become apparent and comprehensible from the descriptions of embodiments with reference to the following drawings.
FIG. 1 is a partial exploded view of a cell according to an embodiment of the present disclosure;
FIG. 2 is a schematic diagram of assembly of a terminal pole and a current collector according to an embodiment of the present disclosure;
FIG. 3 is a schematic structural diagram of a cell according to an embodiment of the present disclosure;
FIG. 4 is a schematic diagram of a current flow direction of a cell in FIG. 3;
FIG. 5 is a schematic structural diagram of a cell from a perspective according to an embodiment of the present disclosure;
FIG. 6 is a schematic structural diagram of a cell from another perspective according to an embodiment of the present disclosure;
FIG. 7 is a schematic diagram of current flow directions of the cells in FIG. 5 and FIG. 6;
FIG. 8 is a schematic structural diagram of a cell from a perspective according to an embodiment of the present disclosure;
FIG. 9 is a schematic structural diagram of a cell from another perspective according to an embodiment of the present disclosure;
FIG. 10 is a schematic diagram of current flow directions of the cells in FIG. 8 and FIG. 9;
FIG. 11 is a schematic diagram of assembly of a cell and a heat dissipation assembly according to an embodiment of the present disclosure;
FIG. 12 is a partial exploded view of a battery pack according to another embodiment of the present disclosure;
FIG. 13 is a schematic diagram of assembly of a cell and an explosion-proof valve according to an embodiment of the present disclosure;
FIG. 14 is a schematic structural diagram of a connecting member from a perspective according to an embodiment of the present disclosure;
FIG. 15 is a schematic structural diagram of a connecting member from another perspective according to an embodiment of the present disclosure;
FIG. 16 is a schematic diagram of mating between a second thermally conductive member and two cells according to an embodiment of the present disclosure;
FIG. 17 is an enlarged view of a region A circled in FIG. 16; and
FIG. 18 is a schematic diagram of assembly of a terminal pole and a cover plate according to an embodiment of the present disclosure.

In the drawings:
Battery pack 1000;
Explosion-proof valve 1; Venting direction 11;
Cell 2; Housing 21; Side plate 211; Cover plate 212; First surface 213; Second surface 214; Cell core 22; Cell core body 221; Current collector 222;
Terminal pole group 3; Positive terminal pole 31; Negative terminal pole 32; terminal pole 33; First connecting section 331; Second connecting section 332;
First cooler 41; Second cooler 42; Second thermally conductive member 43; First thermally conductive member 44; heat sink 45; Connecting member 46; First connecting piece 461; Second connecting piece 462; Third connecting piece 463; Fourth connecting piece 464.

### DETAILED DESCRIPTION

Embodiments of the present disclosure are described in detail below, and examples of the embodiments are shown in drawings. Same or similar elements or the elements having the same or similar functions are denoted by the same or similar reference numerals throughout the description. The embodiments described below with reference to the drawings are exemplary and used only for explaining the present disclosure, and cannot be construed as a limitation on the present disclosure.

A battery pack 1000 according to an embodiment of the present disclosure is described below with reference to the drawings.

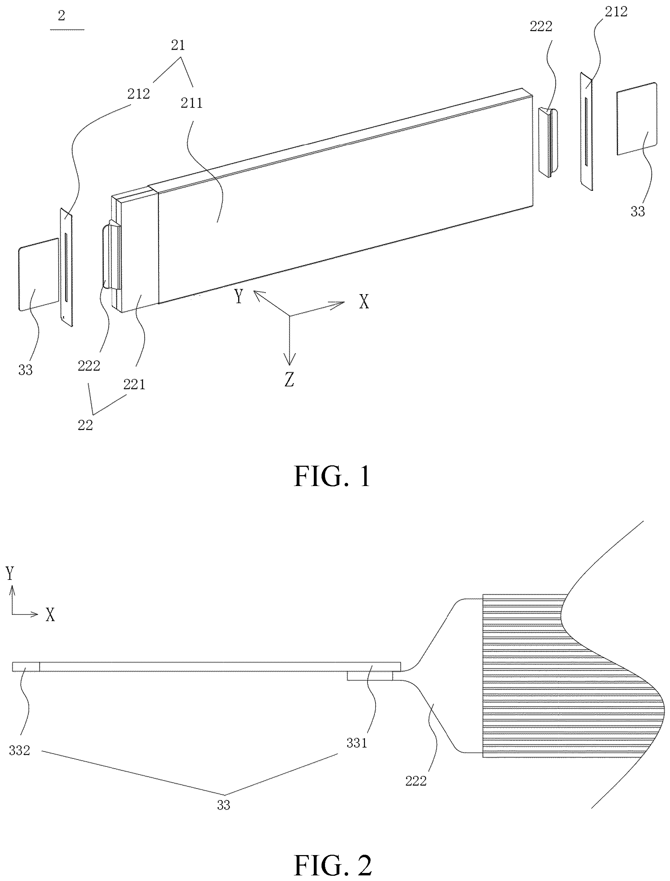

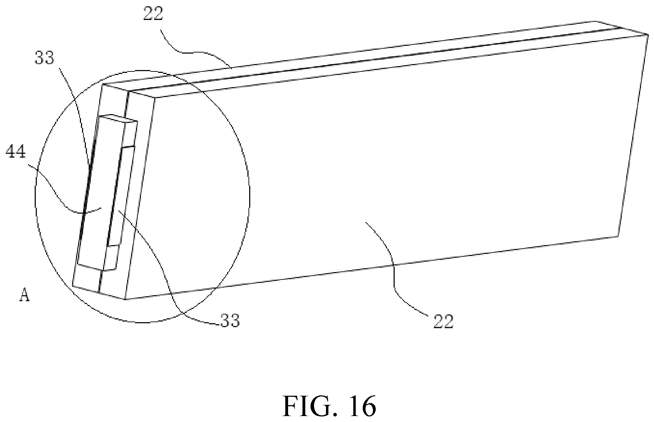

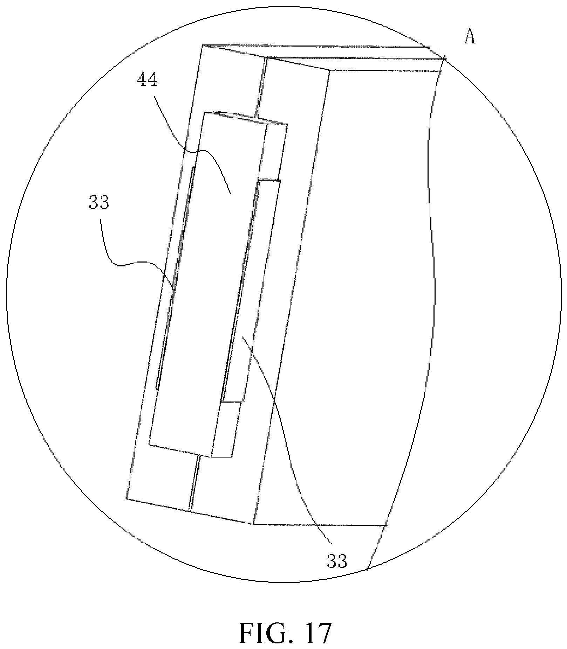

As shown in FIG. 1 to FIG. 18, the present disclosure provides a battery pack 1000. The battery pack 1000 includes a cell 2 and a heat transfer member.

Specifically, the cell 2 includes a housing 21, a cell core 22, and multiple terminal poles 33. An accommodating space is defined in the housing 21. The cell core 22 is arranged in the accommodating space. The housing 21 has at least a first surface 213 and a second surface 214. Each of the terminal pole 33 is arranged on the cell core 22 and extends out of the housing 21 from the first surface 213. At least one of the terminal poles 33 is a sheet-like element. The heat transfer member is configured to transfer heat of the cell 2 from the first surface 213 to the second surface 214.

In other words, as shown in FIG. 1, the battery pack 1000 in this embodiment of the present disclosure is mainly composed of the cell 2 and the heat transfer member. The cell 2 is mainly composed of the housing 21, the cell core 22, and the multiple terminal poles 33. The housing 21 has the accommodating space. The accommodating space may play a role in accommodation. The cell core 22 may be accommodated inside the accommodating space. An outer surface of the housing 21 may include at least the first surface 213 and the second surface 214. Each of the terminal poles 33 is arranged on the cell core 22. Specifically, the terminal pole 33 may extend out of the housing 21 from the first surface 213, to achieve lead-out of the terminal pole 33.

At least two terminal poles 33 are arranged. When two terminal poles 33 are arranged, one terminal pole 33 may be used as a positive terminal pole 31, and the other terminal pole 33 may be used as a negative terminal pole 32. For ease of description, it may be defined that a positive terminal pole 31 and a negative terminal pole 32 form a terminal pole group. For a terminal pole group, the positive terminal pole 31 and the negative terminal pole 32 may be arranged on a same first surface 213, or the positive terminal pole 31 and the negative terminal pole 32 may be arranged on different first surfaces 213, which is not limited herein. When multiple terminal pole groups are arranged, the multiple terminal pole groups may be located on a same side or different sides of the housing 21, which is also not limited herein. In other words, as long as the terminal pole 33 is arranged on the first surface 213, the terminal pole belongs to the protection scope of the present disclosure.

It should be noted that, as shown in FIG. 1 to FIG. 17, the at least one terminal pole 33 is a sheet-like structural member. At least part or a whole of the terminal pole 33 may be a sheet-like element, which is not limited herein. For example, the cell core 22 includes at least one cell core body 221 and a current collector 222 connected to a corresponding cell core body 221. Each cell core body 221 may include a positive electrode plate, a separator, and a negative electrode plate. The current collector 222 corresponding to each cell core body 221 may be classified into a positive current collector and a negative current collector. The positive current collector is connected to the positive electrode plate. The negative current collector is connected to the negative electrode plate. The positive current collector is connected to the positive terminal pole 31. The negative current collector is connected to the negative terminal pole 32. The terminal pole group 3 includes, but is not limited to, the following cases: Case I. In a terminal pole group 3, only the positive terminal pole 31 is a sheet-like terminal pole 33. Case II. In a terminal pole group 3, only the negative terminal pole 32 is a sheet-like terminal pole 33. Case III. In a terminal pole group 3, the positive terminal pole 31 and the negative terminal pole 32 are both sheet-like terminal pole 33.

Optionally, the terminal pole 33 may include a first connecting section 331 and a second connecting section 332. The first connecting section 331 may be configured to connect to the current collector 222. The second connecting section 332 may be connected to the first connecting section 331. The second connecting section 332 may be configured to connect to an external power consuming device. The first connecting section 331 and/or the second connecting section 332 is the sheet-like element.

In other words, the first connecting section 331 is connected to the second connecting section 332. The first connecting section 331 may be configured to connect to the current collector 222, for example, connect to the positive current collector or the negative current collector. It should be noted that, a tab of the cell core 22 in the present disclosure may be a composite of a positive foil and a negative foil. The current collector 222 may be a structure formed by welding the tab. In this case, the current collector 222 and the tab may be two different states of a same substance. It should be noted that, whether the tab and the current collector 222 are separately arranged, or the tab and the current collector 222 belong to a same structure, the tab and the current collector belong to the protection scope of the present disclosure.

A first end of the second connecting section 332 is connected to the first connecting section 331. A second end of the second connecting section 332 is configured to connect to the external power consuming device. For example, the second connecting section 332 is located on a left side of the first connecting section 331. A right end of the first connecting section 331 may be connected to the positive current collector or the negative current collector. A left end of the first connecting section 331 may be connected to a right end of the second connecting section 332. A left end of the second connecting section 332 may be connected to the external power consuming device.

In addition, at least one of the first connecting section 331 and the second connecting section 332 is a sheet-like element. In other words, the terminal pole 33 includes the following cases: Case I. Only the first connecting section 331 is the sheet-like element. Case II. Only the second connecting section 332 is the sheet-like element. Case III. The first connecting section 331 and the second connecting section 332 are both the sheet-like elements.

In the related art, a conventional terminal pole is a cylindrical element. The conventional terminal pole is arranged on an end portion of the cell core, and a diameter of the cylindrical element needs to be less than a thickness of the cell core. However, a surface area of the cylindrical element is related to the diameter. Therefore, the cylindrical element has a relatively small surface area. In contrast, at least part of the terminal pole 33 in the present disclosure has a sheet-like element. The sheet-like element has a relatively small thickness, and sizes of the sheet-like element in multiple directions may be different from each other. For example, even if the thickness of the sheet-like element is less than a thickness of the cell core 22, the sheet-like element may increase a total area of the terminal pole 33 by expanding the size in another direction. For example, when a thickness direction of the sheet-like element is a front-rear direction, the sheet-like element may expand the sizes in a length direction and a height direction. When at least the first connecting section 331 adopts a sheet-like element, not only an area of the terminal pole 33 can be increased, but also an overcurrent area of the current collector 222 can be increased. In the related art, the terminal pole is led out through a connecting sheet, and a conventional connecting sheet is designed to severely generate heat as a result of a limited overcurrent area. However, in this embodiment, the sheet-like element is adopted to increase the area of the terminal pole 33, which can improve a heat dissipation effect. Through increase of the overcurrent area, a degree of heat generation can be reduced, which resolves a technical problem of a limited fast-charging capability of a battery having the conventional terminal pole in the related art.

In other words, when the terminal pole 33 in this embodiment adopts the sheet-like element, not only the area of the terminal pole 33 can be increased, but also the overcurrent area of the current collector 222 can be increased. Increasing the area of the terminal pole 33 facilitates rapid heat dissipation of the terminal pole 33. Increasing the overcurrent area reduces the heat generation amount, thereby helping improve charging efficiency of the cell 2, improving a fast-charging capability of the cell 2, and implementing fast charging of the battery pack 1000. The battery pack 1000 may provide power for a vehicle and the like, and may be used as a power battery.

The battery pack 1000 in the present disclosure further includes the heat transfer member, which transfers the heat of the cell 2 from the first surface 213 to a position near a position of the second surface 214. In other words, the heat transfer member can transfer heat near the terminal pole 33 to another position, which achieves rapid heat dissipation of heat of a position near the terminal pole 33.

Based on the above, according to the battery pack 1000 in this embodiment of the present disclosure, not only the overcurrent area is increased by the sheet-like terminal pole 33, but also rapid heat dissipation near the terminal pole 33 is achieved by the heat transfer member, thereby achieving fast charging of the battery pack 1000.

Optionally, the terminal pole 33 is formed in one piece. For example, the terminal pole 33 prepared through an integrally formed process, for example, stamping, may simultaneously include the first connecting section 331 and the second connecting section 332. In this embodiment, the integrally formed terminal pole 33 is adopted, to facilitate processing and production. For example, a step of connecting the first connecting section 331 and the second connecting section 332 together may be omitted.

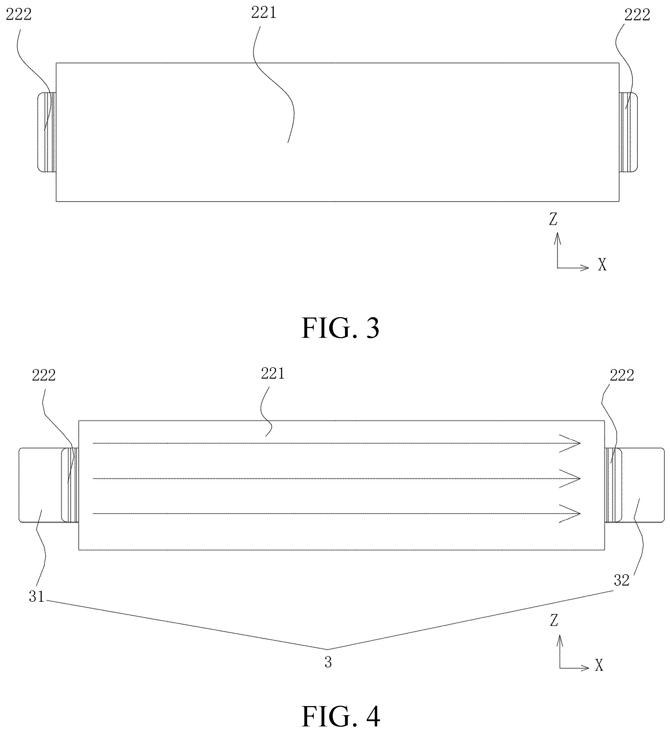

In some specific implementations of the present disclosure, as shown in FIG. 2 and FIG. 3, the terminal pole 33 is a rectangular member. For example, the first connecting section 331 and the second connecting section 332 may be combined to form a rectangular member. The rectangular member is a plate-shaped member. For example, the first connecting section 331 and the second connecting section 332 may extend along a same plane. The first connecting section 331 is located on a left side of the second connecting section 332. The first connecting section 331 and the second connecting section 332 each extend along a horizontal direction and are located in a same horizontal plane.

In this embodiment, the terminal pole 33 having a rectangular structure is adopted, to help the terminal pole 33 connect to the current collector 222 and the external power consuming device. For example, a side of the rectangular member is connected to the current collector 222, to ensure a sufficiently large overcurrent area. In addition, the rectangular member is adopted, to help simultaneously increase the area of the terminal pole 33 and the overcurrent area of the current collector 222, thereby further improving the fast-charging capability of the cell 2.

In addition, when the terminal pole 33 is the rectangular member, a spacing between two side surfaces of the terminal pole 33 along a thickness direction thereof is uniform. For example, a length direction of the terminal pole 33 extends in the horizontal direction, and the thickness direction extends in an up-down direction. For multiple positions on the terminal pole 33, a spacing between an upper surface and a lower surface of the terminal pole 33 is the same. In this embodiment, the sheet-like terminal pole 33 having a uniform thickness is adopted, to help improve processing efficiency.

According to an embodiment of the present disclosure, the housing 21 has edges extending along a first direction, a second direction, and a third direction. The first direction and the second direction define a first plane. The first direction and the third direction define a second plane. The second direction and the third direction define a third plane. The first surface 213 is connected to the second surface 214. The first surface 213 is parallel to the third plane. The second surface 214 is parallel to the second plane.

In other words, the housing 21 extends in the first direction, the second direction, and the third direction, that is, has a first edge, a second edge, and a third edge. The first edge extends along the first direction, the second edge extends along the second direction, and the third edge extends along the third direction. The first plane may be defined by the first direction and the second direction. The second plane may be defined by the first direction and the third direction. The third plane may be defined by the second direction and the third direction. For example, the first direction is an x-axis direction, the third direction is a y direction, and the second direction is a z-axis direction. In this case, the first plane is an xz plane, the second plane is an xy plane, and the third plane is a yz plane. In this case, the housing 21 may be a cube. The first direction may be the length direction, the second direction may be the up-down direction, and the third direction may be the front-rear direction.

In other words, as shown in FIG. 1, FIG. 3, and FIG. 5 to FIG. 10, a size of the cell core 22 in the first direction is greater than a size in the second direction. The terminal pole group 3 is arranged on an end portion of the cell core body 221 in the first direction. For example, the cell core 22 is an existing cell core structure, and has an appearance in a cuboid. A length direction of the cell core 22 is parallel to the first direction. A height direction of the cell core 22 is parallel to the second direction. A thickness direction of the cell core 22 is parallel to the third direction. In this embodiment, one or more terminal pole groups 3 may be arranged on one cell core body 221. The terminal pole groups 3 are all arranged at the end portion of the cell core body 221 in the first direction. It should be noted that, when multiple terminal pole groups 3 are arranged, a case in which a terminal pole group 3 is on one end of the cell core body 221 in the first direction, and another terminal pole group 3 is at another end of the cell core body 221 in the first direction is included in this embodiment. A case in which the multiple terminal pole groups 3 are simultaneously located on a same end of the cell core body 221 in the first direction is further included in this embodiment. In addition, a case in which multiple cell core bodies 221 are arranged, and terminal pole groups 3 of each of the cell core bodies 221 are located on an end portion of the corresponding cell core body 221 in the first direction is further included in this embodiment. Details are not described herein. In addition, in this embodiment, it is not limited whether a positive terminal pole 31 and a negative terminal pole 32 corresponding to a terminal pole group 3 are at the same end of the cell core body 221 in the first direction. In other words, a case in which a positive terminal pole 31 and a negative terminal pole 32 of a terminal pole group 3 on a cell core body 221 are located on different sides of the cell core body 221 is included in this embodiment. In addition, a case in which a cell core body 221 has multiple terminal pole groups 3, positive terminal poles 31 of the multiple terminal pole groups 3 are located on one side of the cell core body 221, and negative terminal poles 32 of the multiple terminal pole groups 3 are located on another side of the cell core body 221, that is, the cell core body 221 has a same polarity on a same side in the first direction is included in this embodiment. A case in which a cell core body 221 has multiple terminal pole groups 3, and the cell core body 221 has different polarities on a same side in the first direction is further included in this embodiment.

In other words, the terminal pole groups 3 are arranged on the end portion of the cell core body 221 in the first direction, that is, the first surface 213, which not only avoids a need to reserve a space on an outer side of the cell core body 221 in the second direction to extend a heat dissipation path, but also helps increase a maximum size range of the cell core body 221 in the second direction, to increase a battery capacity.

In this embodiment, through limitation of a relative positional relationship between the first surface 213 and the second surface 214, a heat transfer direction of the heat transfer member may be further limited, to avoid impact on a heat loss effect near the terminal pole 33 as a result of heat gathering near the first surface 213.

In some specific implementations of the present disclosure, a surface area of the second surface 214 is greater than a surface area of the first surface 213. In other words, in this embodiment, the terminal pole 33 is arranged on the first surface 213 with a smaller area, and the heat near the first surface 213 is transferred to a position near the second surface 214 with a larger area through the heat transfer member, which can expand a heat dissipation area, thereby further improving the heat dissipation effect.

For example, the housing 21 may include side plates 211 and cover plates 212. The side plates 211 define the accommodating space, which may be configured to accommodate the cell core 22. The accommodating space may be closed by the cover plates 212. A mounting hole is arranged extending through each of the cover plates 212. The terminal pole 33 in the present disclosure may run through the mounting hole and be connected to the current collector 222 on the end portion of the cell core body 221. In this case, the first surface 213 is arranged on the cover plate 212. The first surface 213 may be used as an end surface. The second surface 214 and a front side surface and a rear side surface parallel to the first plane are arranged on the side plate 211. The second surface 214 may be used as a top surface or a bottom surface. In this case, at least part of the terminal pole 33 is the sheet-like element. Therefore, the terminal pole 33 can be led out in the sheet shape through the end surface of the housing 21 through mating of the terminal pole 33 with the current collector 222 and the cell core body 221. A total quantity of the sheet-like lead-out terminal poles 33 led out through the end surface may be, but is not limited to, one. In addition, when areas of the front side surface and the rear side surface are greater than the area of the second surface 214, the area of the second surface 214 is greater than the area of the first surface 213, and a shape of the housing 21 is substantially the same as the shape of the cell core body 221, the front side surface and the rear side surface may be defined as large surfaces, and the second surface 214 may be defined as a small surface.

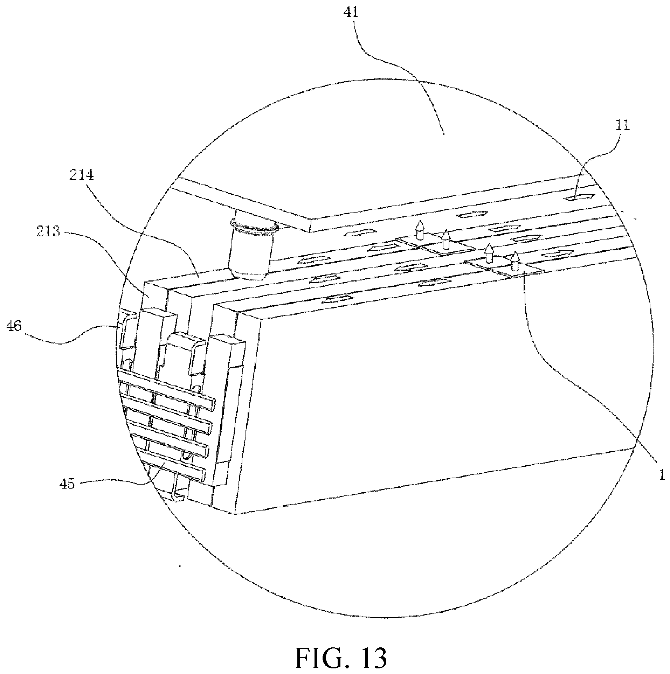

In addition, in a case that the terminal pole 33 is located on a side portion of the cell core body 221 in the first direction, an explosion-proof valve 1 may be designed on a side surface in the second direction of the cell core body 221, or may be designed on a side surface in the third direction. In this embodiment, the explosion-proof valve 1 is prevented from being arranged on the side portion of the cell core body 221 in the first direction, which can reserve more space for the sheet-like terminal pole 33 in the present disclosure, thereby helping further expand the area of the terminal pole 33. It should be noted that, a cooler may be arranged on a side of the explosion-proof valve 1 away from the cell core body 221. For example, the cooler is arranged above the explosion-proof valve 1. Optionally, an avoidance structure is arranged on the cooler, to avoid blocking of opening of the explosion-proof valve 1. The explosion-proof valve 1 may have a venting direction 11 as shown in FIG. 13. Specifically, a gas is firstly vented upward, and then diffused outward. In a generally conventional wound or stacked terminal pole cell structure in the related art, positions of the terminal pole, the explosion-proof valve, a liquid injection hole and the like need to be reserved on the cover plate of the side surface. Limited by a height space of the cover plate, the tab and the terminal pole have relatively small overcurrent areas and high heat generation, resulting in limited fast charging. However, in this embodiment, the explosion-proof valve 1 is prevented from being arranged on the first surface 213 together with the terminal pole 33, which can increase the area of the sheet-like terminal pole 33.

In addition, according to the spaces of the cell core body 221 in the second direction and the third direction, a size of the explosion-proof valve 1 may be further increased, and a quantity of the explosion-proof valves 1 may be increased, thereby improving system thermal safety of the battery pack 1000.

Further, the explosion-proof valve 1 may be arranged on the small surface. An expansion degree of the large surface is easily greater than an expansion degree of the small surface. Therefore, a mounting position of the explosion-proof valve 1 is limited, to avoid compression of the large surface caused by an arrangement of the explosion-proof valve 1 on the large surface, and improve safety performance. In addition, when the multiple cells 2 are arranged in the third direction, a second surface 214 of each of the cells 2 may be located on a same side. In this case, the mounting position of the explosion-proof valve 1 may be arranged on the same side, which improves compactness of the structure and facilitates mounting.

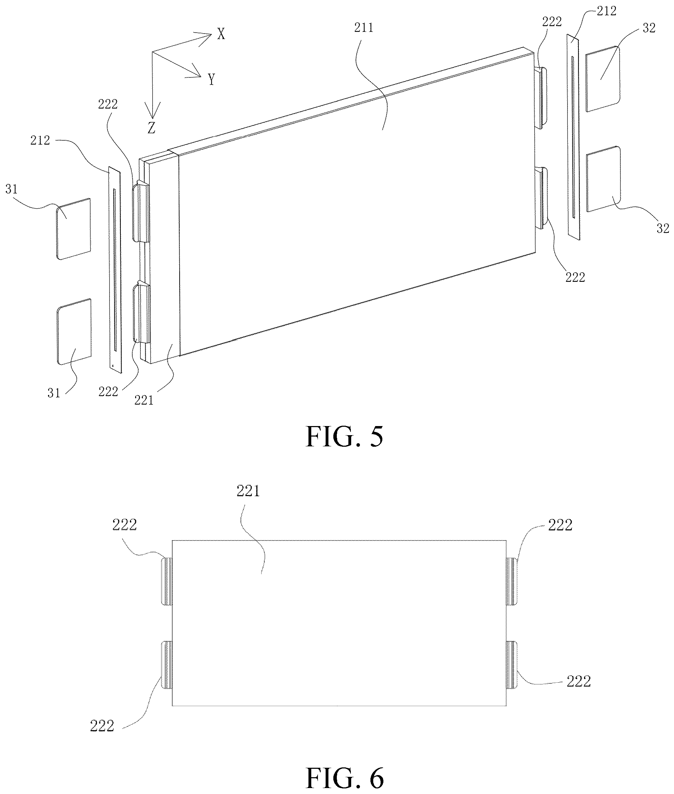

In some specific implementations of the present disclosure, as shown in FIG. 3 and FIG. 5, the positive terminal pole 31 of the terminal pole group 3 is arranged on one end of the cell core body 221 in the first direction, and the negative terminal pole 32 is arranged on another end of the cell core body 221 in the first direction.

For example, the first direction extends in a left-right direction. When one terminal pole group 3 is arranged on the cell core body 221, the terminal pole group 3 includes a positive terminal pole 31 and a negative terminal pole 32. The positive terminal pole 31 is located on a left end of the cell core body 221, and the negative terminal pole 32 is located on a right end of the cell core body 221. In this way, a double-sided single terminal pole structure is formed. For example, a length direction of the cell core body 221 extends in the left-right direction. A positive terminal pole 31 is located on a left side of the cell core body 221, and a negative terminal pole 32 is located on a right side of the cell core body 221. A current direction inside the cell core body 221 during charging is from left to right.

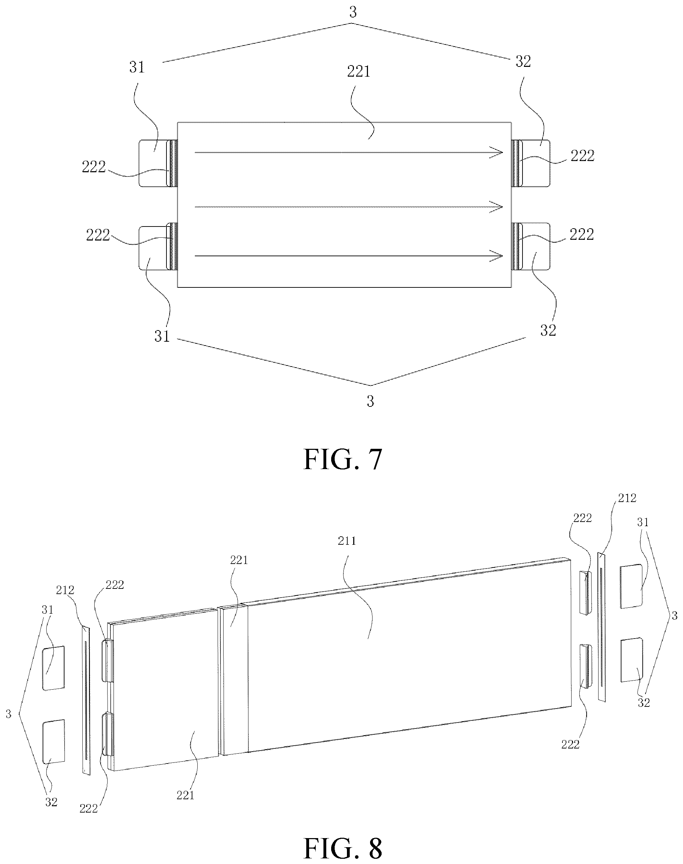

When the multiple terminal pole groups 3 are arranged on the cell core body 221, multiple corresponding positive terminal poles 31 and multiple negative terminal poles 32 are arranged. Each of the positive terminal poles 31 is located on the left side of the cell core body 221, and each of the negative terminal poles 32 is located on the right side of the cell core body 221. In other words, the multiple positive terminal poles 31 are simultaneously arranged on the left side of the cell core body 221, and the multiple negative terminal poles 32 are simultaneously arranged on the right side of the cell core body 221. For example, the length direction of the cell core body 221 extends in the left-right direction. Two terminal pole groups 3 are arranged. For ease of description, the two terminal pole groups 3 are divided into a first terminal pole group and a second terminal pole group. A positive terminal pole 31 of the first terminal pole group and a positive terminal pole 31 of the second terminal pole group are located on the left side of the cell core body 221. A negative terminal pole 32 of the first terminal pole group and a negative terminal pole 32 of the second terminal pole group are located on the right side of the cell core body 221. As shown in FIG. 4 and FIG. 7, the current direction inside the cell core body 221 during charging is from left to right. It may be learned that a case in which the cell core body 221 has different polarities on different sides in the first direction and a case in which the cell core body has a same polarity on a same side in the first direction are included in this embodiment.

In some specific implementations of the present disclosure, as shown in FIG. 5, multiple terminal pole groups 3 are arranged on a cell core body 221. The multiple terminal pole groups 3 are arranged at intervals in the second direction. For example, the second direction of the cell core body 221 extends in the up-down direction, and the multiple terminal pole groups 3 are arranged at intervals in the up-down direction. When two terminal pole groups 3 are arranged, a positive terminal pole 31 of a first terminal pole group is located above a positive terminal pole 31 of a second terminal pole group, and a negative terminal pole 32 of the first terminal pole group is located above a negative terminal pole 32 of the second terminal pole group. It should be noted that, in this embodiment, the multiple terminal pole groups 3 may be located on the same side or different sides of the cell core body 221 in the first direction, which is not limited herein. A case in which the cell core body 221 has a same polarity on a same side in the first direction and a case in which the cell core body has different polarities on a same side in the first direction are included in this embodiment.

In some specific implementations of the present disclosure, the positive terminal pole 31 and the negative terminal pole 32 of the terminal pole group 3 are arranged on the same end of the cell core body 221 in the first direction. For example, the first direction of the cell core 22 is the left-right direction. A terminal pole group 3 is arranged on the cell core body 221. A positive terminal pole 31 and a negative terminal pole 32 of the terminal pole group 3 are simultaneously located on the left side or the right side of the cell core body 221, which is specifically depending on a position of the current collector 222. The positive terminal pole 31 and the negative terminal pole 32 of the terminal pole group 3 are arranged on the same side of the cell core body 221, which not only facilitates a centralized arrangement of the terminal poles 33, but also facilitates a successive arrangement of the multiple cell core bodies 221 along the first direction. For example, two cell core bodies 221 are arranged, and are a first cell core body and a second cell core body respectively. The first cell core body is located on a left side of the second cell core body. A terminal pole group 3 of the first cell core body is located on a leftmost side of the first cell core body. A terminal pole group of the second cell core body is located on a rightmost side of the second cell core body. In this embodiment, a case in which the cell core body 221 has different polarities on a same side in the first direction is included.

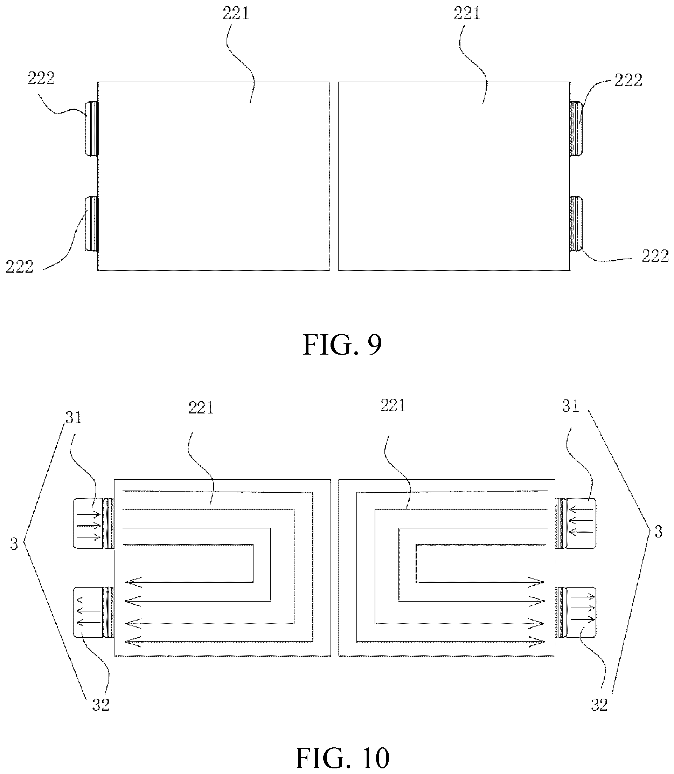

According to an embodiment of the present disclosure, as shown in FIG. 9, two cell core bodies 221 are arranged. The two cell core bodies 221 are successively distributed in the first direction. At least one terminal pole group 3 is arranged on each of the cell core bodies 221. In the first direction, a terminal pole group 3 of one cell core body 221 is located on one end of the cell core 22, and a terminal pole group 3 of the other cell core body 221 is located on the other end of the cell core. For ease of description, the two cell core bodies 221 are defined as the first cell core body and the second cell core body. The first cell core body and the second cell core body are successively distributed in the first direction. The terminal pole group 3 corresponding to the first cell core body may be located on the leftmost side of the first cell core body. The terminal pole group 3 corresponding to the second cell core body may be located on the rightmost side of the second cell core body. In this case, a positive terminal pole 31 and a negative terminal pole 32 of the terminal pole group 3 of the first cell core body are arranged on a left side of the first cell core body in the first direction. A positive terminal pole 31 and a negative terminal pole 32 of the terminal pole group 3 of the second cell core body are arranged on a right side of the second cell core body in the first direction.

Optionally, as shown in FIG. 9, when two terminal pole groups 3 are arranged, for ease of description, the two terminal pole groups 3 are defined as the first terminal pole group and the second terminal pole group. The first terminal pole group corresponds to the first cell core body. The second terminal pole group corresponds to the second cell core body. The positive terminal pole 31 and the negative terminal pole 32 of the first terminal pole group are located on the left side of the first cell core body. The positive terminal pole 31 and the negative terminal pole 32 of the second terminal pole group are located on the right side of the second cell core body. As shown in FIG. 10, during charging, currents are conducted inside the cell core bodies in the following directions. For the first cell core body, the current is conducted from the positive terminal pole 31 of the first terminal pole group on the left side, through the first cell core body, and backs to the negative terminal pole 32 of the first terminal pole group. For the second cell core body, the current is conducted from the positive terminal pole 31 of the second terminal pole group on the right side, through the second cell core body, and backs to the negative terminal pole 32 of the second terminal pole group.

It may be learned that, for a structure in which the same side of the cell core body 221 has multiple sheet-like lead-out terminal poles 33, the positive terminal pole 31 and the negative terminal pole 32 may be designed on a same side or different sides. For a design of a same polarity on a same side, the terminal poles may be flexibly arranged on the cover plate 212 according to a size of the terminal pole 33 that is actually required and a height of the terminal pole 33 that can be manufactured. For a design of different polarities on the same side, not only an overcurrent of the current collector 222 can be increased, but also a current direction can be changed, and the current conduction path can be reduced, which can effectively reduce heat generation.

In some specific implementations of the present disclosure, the terminal pole 33 is welded to the corresponding current collector 222. The firmness of the connection between the terminal pole group 3 and the corresponding current collector 222 is improved by welding.

According to an embodiment of the present disclosure, as shown in FIG. 2, the terminal pole 33 is in surface contact with the corresponding current collector 222. The overcurrent area is improved by a relatively large contact area.

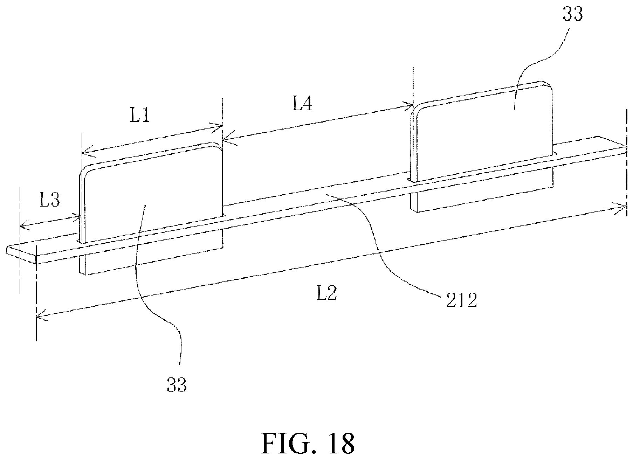

In addition, as shown in FIG. 18, a maximum length of the terminal pole 33 may be defined as L1. A length of the cover plate 212 may be defined as L2. A gap between the terminal pole 33 and the cover plate 212 may be defined as L3. A gap between two adjacent terminal poles 33 may be defined as L4. A quantity of the terminal poles 33 may be defined as N. The following equation may exist between the parameters: L1 = (L2 - L3 * 2- (N - 1) L4) / N. The quantity and the sizes of the sheet-like terminal poles 33 on the cover plate 212 may be designed according to the above equation.

According to an embodiment of the present disclosure, the heat transfer member includes a first thermally conductive member 44. The first thermally conductive member 44 is arranged on the first surface 213 and is thermally connected to the terminal pole 33. The first thermally conductive member 44 extends toward a position of the second surface 214, to transfer heat of the terminal pole 33 to the second surface 214. In other words, since the first thermally conductive member 44 extends substantially toward the second surface 214, and the first thermally conductive member 44 is thermally connected to the terminal pole 33, the heat from a position of the first surface 213 near the terminal pole 33 to the second surface 214 can be transferred through the thermal connection between the terminal pole 33 and the first thermally conductive member 44. It should be noted that, the heat transfer member in the present disclosure leads out the heat near the first surface 213. Not only the heat of the terminal pole 33 may be led out, but also heat of the current collector may be led out. In other words, the heat of the terminal pole 33 and near the terminal pole 33 may be led out.

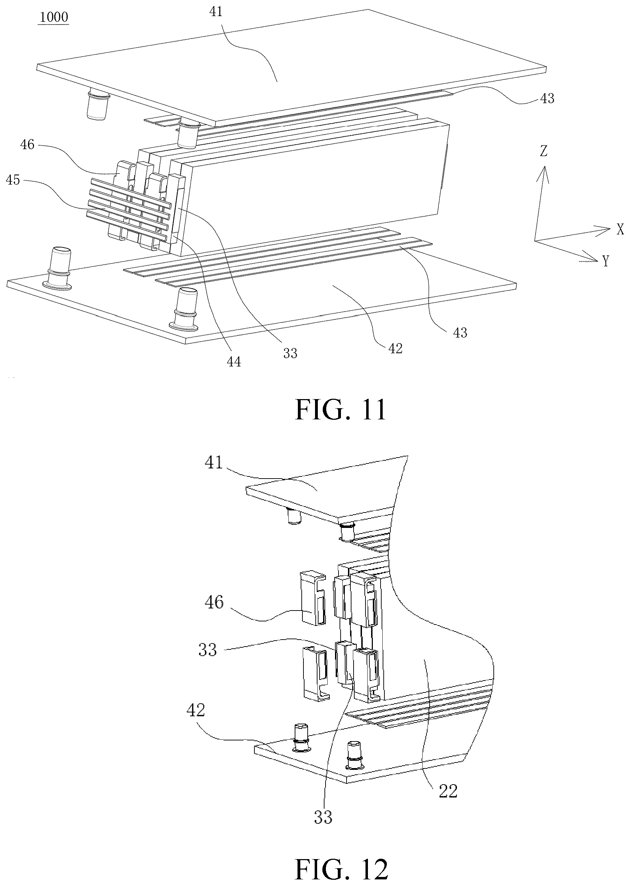

In some specific implementations of the present disclosure, as shown in FIG. 12, multiple cells 2 are arranged. The first thermally conductive member 44 is thermally connected to terminal poles 33 of two adjacently arranged cells 2. In other words, a first thermally conductive member 44 may be simultaneously mated with two cells 2. In other words, two adjacent cells 2 may share a first thermally conductive member 44, which improves structure compactness.

Optionally, the multiple cells 2 are successively arranged along the third direction. The third direction may be the thickness direction of each of the cells 2. The first thermally conductive member 44 may be thermally connected to terminal poles 33 of the two cells 2 arranged adjacently in the third direction. For example, in the third direction, two cells 2 are arranged, and are a first cell and a second cell respectively. The first cell has a first terminal pole group and the second cell has a second terminal pole group. A terminal pole 33 of the first terminal pole group is located on a left side of the first cell. A terminal pole 33 of the second terminal pole group is located on a left side of the second cell. In addition, since the first cell and the second cell are successively arranged in the third direction, at least one terminal pole 33 of the first cell and at least one terminal pole 33 of the second cell are adjacently arranged adjacent in the third direction. A gap exists between the two terminal poles. The first thermally conductive member 44 is arranged at a position of the gap. Thermal conductivity can be performed simultaneously on the terminal poles 33 of the two cells through the first thermally conductive member 44. Optionally, in the second direction, a length of the first thermally conductive member 44 may be equal to the length of the terminal pole 33 or greater than the length of the terminal pole 33. When the length of the first thermally conductive member is equal to the length of the terminal pole, the heat dissipation effect of the terminal pole 33 can be ensured. When the length of the first thermally conductive member is greater than the length of the terminal pole 33, the heat of the terminal pole 33 is helped transfer to a wider range.

Further, the first thermally conductive member 44 is in surface contact with the terminal pole 33, which can increase a heat transfer effect.

In some specific implementations of the present disclosure, as shown in FIG. 12, the battery pack 1000 further includes a connecting member 46. At least part of the connecting member 46 is located between the heat sink 45 and the terminal pole 33, and is thermally connected to the heat sink 45 and the terminal pole 33. Through the arrangement of the connecting member 46, cases of mounting difficulties and low firmness of the heat sink and the terminal pole 33 are resolved. When the terminal pole 33 is connected to the heat sink 45 through the connecting member 46, the heat sink 45 may be located on an outer side the connecting member 46, and the terminal pole 33 may be located on an inner side of the connecting member 46.

According to an embodiment of the present disclosure, the heat transfer member further includes a first connecting piece 461, a second connecting piece 462, and a third connecting piece 463 that are successively connected. In other words, the connecting member 46 includes the first connecting piece 461, the second connecting piece 462, and the third connecting piece 463. The first connecting piece 461, the second connecting piece 462, and the third connecting piece 463 are mated with each other to form the accommodating groove. The connecting member 46 includes the first connecting piece 461, the second connecting piece 462, and the third connecting piece 463, which may together form a member having a shape like a Chinese character " 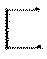 ". The accommodating groove is configured to accommodate the thermally conductive member. The first connecting piece 461 is connected to the terminal pole 33 of one of the two cells 2. The second connecting piece 462 is connected to the terminal pole 33 of the other of the two cells 2. The third connecting piece 463 is located between the first connecting piece 461 and the second connecting piece 462, and is connected to the first connecting piece 461 and the second connecting piece 462.

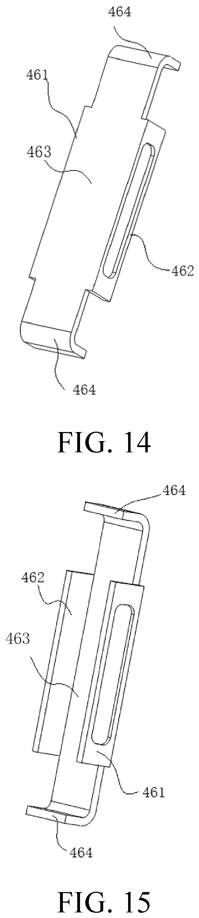

In other words, as shown in FIG. 14 to FIG. 16, the connecting member 46 includes the first connecting piece 461, the second connecting piece 462, and the third connecting piece 463. The first connecting piece 461 is connected to a terminal pole 33 of one of the adjacently arranged two cells 2 in the third direction. The second connecting piece 462 is connected to the terminal pole 33 of the other of the adjacently arranged two cells 2 in the third direction. The third connecting piece 463 is connected to the first connecting piece 461 and the second connecting piece 462, and is mated with the first connecting piece and the second connecting piece to form the accommodating groove. The accommodating groove is configured to accommodate the first thermally conductive member 44. For example, the third direction is the front-rear direction. The first connecting piece 461 and the second connecting piece 462 may be arranged spaced away in the front-rear direction. The third connecting piece 463 may be located between the first connecting piece 461 and the second connecting piece 462. A rear end of the third connecting piece 463 is connected to the first connecting piece 461. A front end of the third connecting piece 463 is connected to the second connecting piece 462. The first thermally conductive member 44 is located between the first connecting piece 461 and the second connecting piece 462, and is thermally connected to the first connecting piece 461, the second connecting piece 462, and the third connecting piece 463. In addition, the third connecting piece 463 is thermally connected to the heat sink 45.

According to an embodiment of the present disclosure, the heat transfer member further includes a fourth connecting piece 464. The fourth connecting piece 464 is arranged on an end portion of the third connecting piece 463 close to the second surface 214. The fourth connecting piece 464 is thermally connected to the thermally conductive member and the second surface 214.

In other words, as shown in FIG. 14 to FIG. 16, the connecting member 46 further includes the fourth connecting piece 464. The fourth connecting piece 464, the first connecting piece 461, and the second connecting piece 462 are located on the same side of the third connecting piece 463. The fourth connecting piece 464 is arranged on at least one end of the third connecting piece 463 in the second direction. The fourth connecting piece 464 may limit the first thermally conductive member 44. Optionally, two fourth connecting pieces 464 are arranged. One fourth connecting piece 464 is located on an upper end of the third connecting piece 463, and the other fourth connecting piece 464 is located on a lower end of the third connecting piece 463. It may be learned that an outer periphery of the first thermally conductive member 44 can be thermally conductive in multiple directions through the first connecting piece 461, the second connecting piece 462, the third connecting piece 463, and the fourth connecting pieces 464, so that the heat is transferred to the heat sink 45 in a timely and efficient manner. For example, the fourth connecting piece 463 is thermally connected to the cooler.

In some specific implementations of the present disclosure, the battery pack 1000 further includes the heat sink 45. At least part of the heat sink 45 is arranged opposite to the first surface 213, and is configured to exchange heat with the terminal pole 33.

In other words, a heat dissipation assembly includes the heat sink 45. The heat sink 45 is located on a side of the terminal pole 33 away from the cell core body 221 in the first direction, and is thermally connected to the terminal pole 33. In other words, the design of the heat sink 45 on the outer side of the terminal pole 33 can reduce a degree of temperature rise of the terminal pole 33.

According to an embodiment of the present disclosure, the heat sink 45 includes at least one tubular member. The tubular member has a first fluid channel for a cooling fluid to flow. Part of the tubular member is formed as at least part of the heat transfer member. A structure of the tubular member is adopted, so that the tubular member has a relatively large length, which helps enable one tubular member to correspond to multiple terminal poles 33, or even correspond to multiple cells 2. For example, part of the tubular member extends in the third direction. The multiple cells 2 are also successively arranged in the third direction. In this way, a tubular member can correspond to terminal poles 33 of the multiple cells 2. In this embodiment, the tubular member is adopted as the at least part of the heat sink 45, which not only enables easy control through an extension direction of the tubular member (specifically, when the tubular member serves as the at least part of the heat transfer member), but also achieves lead-out of the heat at the position near the terminal pole 33 through the extension direction of the tubular member. Moreover, one tubular member corresponds to multiple terminal poles 33, which helps increase structure compactness and a component utilization rate. In addition, since the tubular member has the first fluid channel, a fluid for cooling is injected into the first fluid channel. Exchange of the heat near the terminal pole 33 and the heat sink 45 can be achieved through the fluid having a temperature difference.

Optionally, multiple tubular members are arranged. For example, four tubular members are arranged. The four tubular members are successively arranged in the second direction. Part of each of the tubular members can be arranged opposite to the first surface 213. Every two tubular members may form a one-in-one-out circuit. In this embodiment, the multiple tubular members are adopted, to help increase of a lead-out heat amount and a range of temperature control.

In some specific implementations of the present disclosure, the battery pack 1000 further includes the cooler. The cooler is thermally connected to the second surface 214. The cooler is arranged near the second surface 214, so that the heat near the second surface 214 can be led out, and the heat exchange of the heat accumulated near the second surface 214 can be achieved through the cooler. In addition, the cooler can further perform heat exchange on heat of the second surface 214. In other words, the cooler is arranged near the second surface 214, which not only can be mated with the cooler through the heat transfer member to perform temperature control on a position near the first surface 213, especially near the terminal pole 33, so as to achieve timely heat dissipation near the terminal pole 33, but also can perform heat dissipation on the second surface 214 to achieve temperature control for multiple positions on the housing 21.

According to an embodiment of the present disclosure, a second fluid channel is provided in the cooler for the cooling fluid to flow. The cooler is thermally connected to the heat transfer member. In other words, the second fluid channel is provided in the cooler. The cooling fluid is loaded in the second fluid channel. A temperature difference exists between the cooling fluid and a neighborhood of the second surface 214, and the cooling fluid may be further mated with a fluid inlet and a fluid outlet to achieve fluid flow, so as to achieve a rapid exchange of the heat near the second surface 214.

In addition, the second fluid channel is provided in the cooler. The first fluid channel is arranged in the heat sink 45. The second fluid channel is in communication with the first fluid channel. In this case, the cooler may be used as a liquid cooling plate. A fluid is arranged in the heat sink 45, and the communication between the heat sink 45 and the cooler is achieved, which can improve the heat dissipation effect for a position near the terminal pole 33.

According to an embodiment of the present disclosure, two coolers are arranged. The cell 2 is located between the two coolers. In other words, one cooler is located on a side of the cell 2 and corresponds to one second surface 214, and the other cooler is located on another side of the cell 2 and corresponds to another second surface 214. It should be noted that, one second surface 214 may correspond to one or more coolers. For example, two coolers are located on an upper side of the cell 2, and one cooler is located on a lower side of the cell 2. In other words, regardless of whether one or more coolers correspond to the side of the cell 2, as long as at least one cooler is arranged on two sides of the cell 2, it belongs to the protection scope of the present disclosure.

For example, as shown in FIG. 11, the heat dissipation assembly includes two coolers. For ease of description, the two coolers are defined as a first cooler 41 and a second cooler 42. The first cooler 41 is arranged on one end of the cell 2 in the second direction, and the second cooler 42 is arranged on another end of the cell 2 in the second direction. When the first direction extends substantially along the horizontal direction and the second direction extends substantially along the up-down direction, the first cooler 41 may be located above the cell 2, and the second cooler 42 may be located below the cell 2. The first cooler 41 can perform heat conduction on an upper portion of the cell 2. The second cooler 42 can perform heat conduction on a lower portion of the cell 2.

It may be learned that, in this embodiment, the first cooler 41 is mated with the second cooler 42, so that a double-sided cooling sandwich-like cooling structure can be formed on the cell 2, to reduce a temperature difference in the height direction of the cell 2. However, during fast charging at a higher rate, a battery pack in the related art adopts a conventional upper or lower single-sided cooling manner, which causes a large temperature difference in the height direction of the cell. In addition, in this embodiment, the first cooler 41 and the second cooler 42 are arranged on the outer side of the cell 2 in the second direction, to achieve heat dissipation in the second direction, and achieve heat dissipation in the first direction through the sheet-like terminal pole 33 in the first direction. In addition, heat near the terminal pole 33 can be led out to the second surface 214 through the heat transfer member, so that multi-directional heat dissipation of the cell 2 can be achieved.

In some specific implementations of the present disclosure, as shown in FIG. 11, the heat dissipation assembly further includes a second thermally conductive member 43. The second thermally conductive member 43 is thermally connected to the cell 2 and the cooler. In other words, the heat exchange between the cell 2 and the cooler may be implemented by the second thermally conductive member 43. In this embodiment, the second thermally conductive member 43 is arranged, which not only avoids easy damage to the cell 2 caused by direct contact of the cooler with the cell 2, but also avoids a need to design the cooler to be excessively large. In addition, when multiple cells 2 are arranged, one second thermally conductive member 43 may correspond to the multiple cells 2.

According to an embodiment of the present disclosure, as shown in FIG. 11, the cooler and the second thermally conductive member 43 each are a sheet-like element. The second thermally conductive member 43 is in contact with the cooler and the cell 2. For example, an upper end surface of the second thermally conductive member 43 is in contact with a lower end surface of the cooler. A lower end surface of the second thermally conductive member 43 is in contact with an upper end surface of the cell 2. In a manner of surface contact, a heat conduction area is increased, force balance and heat dissipation balance at multiple positions on the cell 2 are improved, and when multiple cells 2 are arranged, force balance and heat dissipation balance of multiple cells 2 are improved.

According to an embodiment of the present disclosure, the battery pack 1000 further includes a tray. A receiving space is defined in the tray. The cell 2 is located in the receiving space. The heat transfer member, the heat sink 45, the cooler, and the like may also be located in the receiving space. As shown in FIG. 11 and FIG. 12, the heat sink 45 and the cooler are respectively thermally connected to different positions on the cell 2. The heat near the first surface 213 can be led out timely by the heat transfer member, which improves heat dissipation efficiency and help achieve the fast charging.

According to an embodiment of the present disclosure, at least one end of the receiving space is open along an axial direction thereof. The cooler is used as a bottom plate or a top plate of the tray. For example, the first cooler 41 is used as the top plate of the tray, and the second cooler 42 is used as the bottom plate of the tray, which can improve the heat dissipation effect, and can further avoid an excessive height-occupied space caused by simultaneous existence of the top plate, the bottom plate, the first cooler 41, and the second cooler 42 of the tray in the height direction.

According to an embodiment of the present disclosure, the terminal pole 33 is parallel to the third plane. For example, the length direction of the terminal pole 33 extends in the second direction, and the height direction of the terminal pole 33 extends in the first direction. In other words, the terminal pole 33 has the length direction and the height direction. The length direction of the terminal pole 33 may be parallel to the second direction, and the height direction of the terminal pole 33 may be parallel to the first direction. In this embodiment, the length direction and the height direction of the terminal pole 33 are limited, so that the terminal pole 33 is helped be connected to the current collector 222 and the external power consuming device. In addition, the terminal pole 33 is parallel to the third plane, which helps increase a contact area between the terminal pole 33 and the first thermally conductive member 44, to increase the heat transfer efficiency between the terminal pole 33 and the first thermally conductive member 44.

According to an embodiment of the present disclosure, the connecting member 46 is welded to the terminal pole 33. Connection reliability can be increased by welding. Further, a side surface of the sheet-like terminal pole 33 is in surface contact with the connecting member 46. For example, the length direction of the terminal pole 33 extends in the up-down direction, and the height direction extends in the left-right direction. A side surface of the terminal pole 33 in the thickness direction of the cell core body 221 is in contact with a side surface of the connecting member 46, which can increase a welding bonding area of the terminal pole 33 and the connecting member 46. Optionally, the connecting member 46 is adhered to the heat sink 45, which can improve assembly efficiency.

Further, the first thermally conductive member 44 is further thermally connected to the current collector 222 corresponding to the terminal pole 33, to improve a heat dissipation effect for the current collector 222.

Optionally, in the second direction, at least one end of the connecting member 46 is thermally connected to the cooler. The first thermally conductive member 44 may be made of a highly thermally conductive material. When the first thermally conductive member 44 is arranged between the cover plate 212 and the connecting member 46, the third connecting piece 463 can lead heat upward and/or downward along the cover plate 212 to the cooler, to increase a heat dissipation amount. The overall heat of the terminal pole 33 and the current collector 222 can be taken away by the connecting member 46, to improve the fast-charging capability. Specifically, the heat dissipation paths include but are not limited to the following heat dissipation paths:
Heat dissipation path I: Current collector 222 → First thermally conductive member 44 → Connecting member 46 → Second thermally conductive member 43 → Cooler.
Heat dissipation path II: Current collector 222 → First thermally conductive member 44 → Connecting member 46 → Heat sink 45.

In a word, the terminal pole 33, the cell 2, and the battery pack 1000 according to the embodiments of the present disclosure adopt a design of a structure of the novel sheet-like terminal pole 33 mated with the heat transfer member with a high heat dissipation path, which improves a high-rate fast-charging capability. Different from a conventional cell core having a positive terminal pole and a negative terminal pole on a side surface, in the present disclosure, the sheet-like lead-out terminal pole 33 is adopted, which greatly utilizes the space of the cover plate 212, improves the heat dissipation area of the current collector 222, and improves an overcurrent capability of the cell core 22. In addition, the design of the heat transfer member and the design of the cooler and the heat sink are combined. For example, the cooler is arranged on two sides, the connecting member 46 is mated with the heat sink 45, and the first thermally conductive member 44 is added between the connecting member 46 and the cover plate 212, to take away the temperature rise of the terminal pole 33 and the like, which can improve the overall fast-charging capability of the power battery.

The present disclosure further provides a vehicle. The vehicle includes the battery pack 1000 according to any of the above embodiments. Since the battery pack 1000 has desirable heat dissipation effect, which improves the fast-charging capability, the vehicle in the present disclosure further has an advantage of a high fast-charging capability. Details are not described herein.

Although some specific embodiments of the present disclosure have been described in detail by the examples, a person skilled in the art should understand that the above examples are merely for description and are not intended to limit the scope of the present disclosure. A person skilled in the art should understand that modifications may be made to the above embodiments without departing from the scope and spirit of the present disclosure. The scope of the present disclosure is defined by the appended claims.

## Claims

1. A battery pack (1000), comprising:
a cell (2), the cell (2) comprising a housing (21), a cell core (22), and a plurality of terminal poles (33), an accommodating space being defined in the housing (21), the cell core (22) being arranged in the accommodating space, the housing (21) having at least a first surface (213) and a second surface (214), the terminal poles (33) being arranged on the cell core (22) and extending out of the housing (21) from the first surface (213), and at least one of the terminal poles (33) being a sheet-like element; and
a heat transfer member, the heat transfer member being configured to transfer heat of the cell (2) from the first surface (213) to the second surface (214).

2. The battery pack (1000) according to claim 1, wherein the housing (21) has edges extending along a first direction, a second direction, and a third direction; the first direction and the second direction define a first plane; the first direction and the third direction define a second plane; the second direction and the third direction define a third plane;
the first surface (213) is connected to the second surface (214); the first surface (213) is parallel to the third plane; and the second surface (214) is parallel to the second plane.

3. The battery pack (1000) according to claim 1 or 2, wherein a surface area of the second surface (214) is greater than a surface area of the first surface (213).

4. The battery pack (1000) according to any of claims 1 to 3, wherein the heat transfer member comprises:
a thermally conductive member, the thermally conductive member being arranged on the first surface (213) and being thermally connected to the terminal pole (33), and the thermally conductive member extending toward a position of the second surface (214), to transfer heat of the terminal pole (33) to the second surface (214).

5. The battery pack (1000) according to any of claims 1 to 4, wherein a plurality of cells (2) are arranged; and the thermally conductive member is thermally connected to the terminal poles (33) of two cells (2) arranged adjacent to each other, respectively.

6. The battery pack (1000) according to any of claims 1 to 5, wherein the heat transfer member further comprises a first connecting piece (461), a second connecting piece (462), and a third connecting piece (463) that are successively connected; the first connecting piece (461), the second connecting piece (462), and the third connecting piece (463) are mated to form an accommodating groove; the accommodating groove is configured to accommodate the thermally conductive member; the first connecting piece (461) is connected to the terminal pole (33) of one of the two cells (2); the second connecting piece (462) is connected to the terminal pole (33) of the other of the two cells (2); and the third connecting piece (463) is located between the first connecting piece (461) and the second connecting piece (462) and is connected to the first connecting piece (461) and the second connecting piece (462).

7. The battery pack (1000) according to any of claims 1 to 6, wherein the heat transfer member further comprises a fourth connecting piece (464); the fourth connecting piece (464) is arranged on an end portion of the third connecting piece (463) close to the second surface (214); and the fourth connecting piece (464) is thermally connected to the thermally conductive member and the second surface (214).

8. The battery pack (1000) according to any of claims 1 to 7, further comprising:
a heat sink (45), at least part of the heat sink (45) being arranged opposite to the first surface (213) and being configured to exchange heat with the terminal pole (33).

9. The battery pack (1000) according to any of claims 1 to 8, wherein the heat sink (45) comprises at least one tubular member; the tubular member has a first fluid channel for a cooling fluid to flow; and part of the tubular member is formed as at least part of the heat transfer member.

10. The battery pack (1000) according to any of claims 1 to 9, further comprising:
a cooler, the cooler being thermally connected to the second surface (214).

11. The battery pack (1000) according to any of claims 1 to 10, wherein a second fluid channel is provided in the cooler for the cooling fluid to flow; and the cooler is thermally connected to the heat transfer member.

12. The battery pack (1000) according to any of claims 1 to 11, wherein two coolers are arranged; and the cell (2) is located between the two coolers.

13. The battery pack (1000) according to any of claims 1 to 12, wherein the terminal pole (33) is parallel to the third plane.

14. A vehicle, comprising the battery pack (1000) according to any of claims 1 to 13.
